Europäisches Patentamt

European Patent Office

Office européen des brevets

(19)

(11) Publication number: 0 077 030
A1

(12) **EUROPEAN PATENT APPLICATION**

(21) Application number: 82109273.1

(22) Date of filing: 07.10.82

(51) Int. Cl.³: **H 01 M 4/02, H 01 M 2/14**

(30) Priority: 08.10.81 US 309814

(43) Date of publication of application: 20.04.83
Bulletin 83/16

(84) Designated Contracting States: **DE FR GB**

(71) Applicant: **Energy Research Corporation, 3 Great Pasture Road, Danbury Connecticut 06810 (US)**

(72) Inventor: **Dodin, Mark G., 31 Burnley Rise, Pittsford, NY 14534 (US)**
Inventor: **Charkey, Allen, Longmeadow Hill Road, Brookfield Connecticut 06804 (US)**

(74) Representative: **Abitz, Walter, Dr.-Ing. et al, Abitz, Morf, Gritschneder, Freiherr von Wittgenstein Postfach 86 01 09, D-8000 München 86 (DE)**

(54) Electrochemical cell with improved separator system.

(57) An electrochemical cell comprising a zinc negative electrode (2) and a separator system (3) including a polymer coating or layer (3a) on the edges of the negative electrode and a unitary multilayer microporous film (36) supported adjacent the electrode.

1

ELECTROCHEMICAL CELL WITH
IMPROVED SEPARATOR SYSTEM

## Background of the Invention

This invention relates to separators for use in electrochemical cells and, in particular, for use in electrochemical cells having a zinc electrode.

As is known, the cycle life of alkaline batteries employing zinc electrodes such as, for example, nickel-zinc, silver-zinc and manganese dioxide-zinc, is limited by a number of factors. One primary factor is shorting of the battery electrodes which results from the growth of zinc dendrites. These dendrites produce tree-like conductive branches which eventually penetrate the battery separator to provide a conductive path between positive and negative electrodes, thereby shorting same. Another factor limiting battery life is so called "shape change" of the zinc electrode. Shape change is the phenomenon of movement of the zinc active material from the electrode edges to the electrode center, thereby significantly reducing the electrode surface area available for electrochemical reaction.

As is also well known, the degree of dendritic growth and the degree of shape change occurring in an alkaline battery are a function of the battery separator. Conventional battery separators typically comprise multiple layers which are selected to be compatible with the cell electrolyte. These layers are also selected to be sufficiently permeable to allow for the passage of electrolyte ions, but not so highly permeable as to readily permit the passage of other materials, e.g., electrode derived conductive substances. Separators of this type usually contain one or more layers of membranous material (i.e., a material having a permeability of about $5 \times 10^{-3}$ mole/(min x in$^2$) or less). A typical membranous material might be cellophane. Other types of membranous material might be as disclosed in U.S. patents 3,351,495; 3,539,396 or 3,970,472. While multilayer separators of the aforesaid type are found to significantly inhibit dendritic growth, they are not as effective in inhibiting electrode shape change which still can occur and eventually result in battery failure.

A further separator construction has been disclosed in European patent application 81103917.1 (publication No. 0040826; equivalent to      U.S. patent application Serial No. 152,725, assigned to the same assignee hereof) wherein the separator comprises a blend of a polyamide (e.g., Elvamides), a significantly lower pore size polymeric constituent (e.g., polyethylene oxide) and a zinc reactive material (e.g., cerium dioxide). In this separator, while the polymeric constituent acts to inhibit dendritic growth akin to the above-described membranous materials, the polyamide constituent, provides sufficient permeability to significantly retard shape change. Additionally, shape change is further retarded by the zinc reactive additive material. The resultant separator is thus said to prevent both zinc dendritic growth and electrode shape change.

U.S. patent application Serial No. 204,645, also assigned to the same assignee hereof, discloses another separator construction in which a liquid polymer solution is disposed in a container comprised of a layer of solid microporous material, and the container layer is disposed adjacent the cell electrode so as to create at least a layer of solution and a layer of solid microporous material outward of the electrode surfaces. In this construction, the solution acts to prevent dendritic growth and microporous material acts to prevent shape change.

While the separators described above have provided a degree of extended battery life, research is still continuing to obtain separators which can extend battery life still further.

It is an object of the present invention to provide an alkaline battery separator system which promotes longer cycle life than heretofore obtainable.

It is a further object of the present invention to provide an alkaline battery separator system which further retards dendritic growth and electrode shape change.

## Summary of the Invention

In accordance with the principles of the present invention, the above and other objectives are realized in an apparatus comprising a zinc negative electrode and a separator system including a polymer coating or layer on the edges of the negative electrode and a unitary multilayer microporous film supported adjacent the electrode. In the apparatus to be described hereinbelow, the polymer is of a type which can prevent charging and dissolution of the zinc active material. The layers of the multilayer film, in turn, are each polymer based and are made unitary or integral by casting one on the top of the other or by laminating. Preferably, three or more layers are employed, with at least one of the inner layers containing a filler which catalizes the reaction of metal zinc with the electrolyte ions to form products soluble in the electrolyte. Metal oxides which catalize the reaction of metal zinc with

4

hydroxl ($OH^-$) ions to form soluble products are preferable.

### Brief Description of the Drawings

The above and other features and aspects of the present invention will become apparent upon reading the following detail description in conjunction with the attached drawings, in which:

FIG. 1 shows apparatus including a separator system in accordance with the principles of the present invention; and

FIG. 2 illustrates a front view of the electrode of the apparatus of FIG. 1.

### Detailed Description

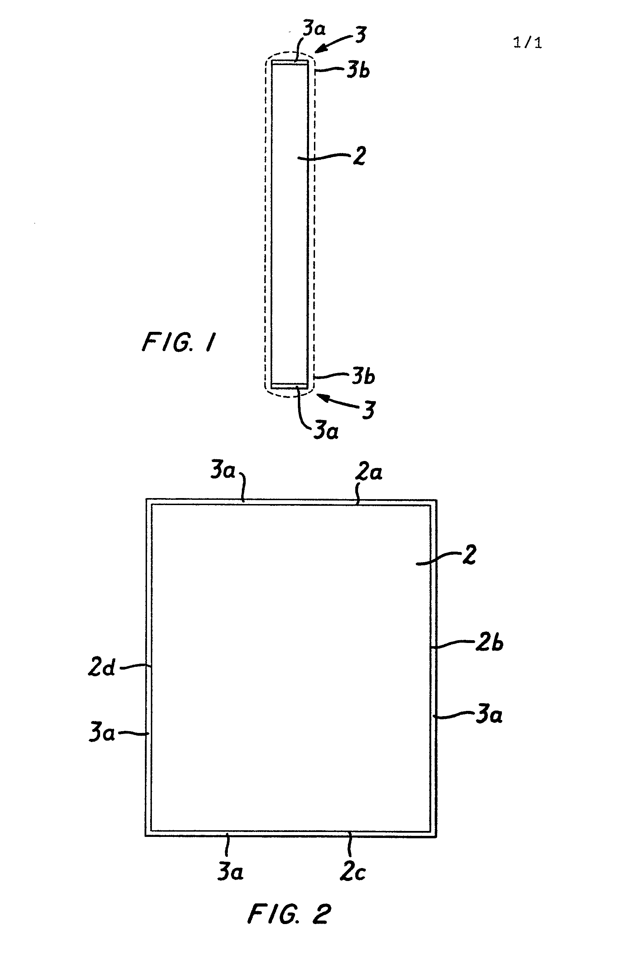

In FIG. 1, the electrochemical apparatus 1 includes a zinc negative electrode 2 which cooperates with a positive electrode (not shown) and an electrolyte (also not shown) disposed between the electrodes to provide generation of electrical energy through electrochemical reaction. A separator system 3 separates the zinc negative electrode 2 from the positive electrode and is designed both to inhibit the growth of zinc dendrites and to retard electrode shape change.

In accordance with the invention, the separator system 3 comprises a non-porous polymer coating or layer 3a (see FIG. 2) applied to the edges 2a-2d of the electrode 2 and a unitary microporous multilayer film 3b supported adjacent the edge coated electrode. In FIG. 1, the film 3b is illustratively shown as a bag surrounding the electrode 2. However, the film might also be heat sealed to the electrode edges, as well as formed into other configuragtions.

4.

In general, the film 3b should comprise a polymer material which is chemically and mechanically stable in the electrochemical cell environment. Furthermore, the film should be capable of providing a desired degree of ionic flow, while also being capable of exhibiting uniformity with the presence therein of large amounts of filler. Preferably, the film 3b comprises several layers, these layers being capable of being processed by any one of a number of known techniques such as, for example, casting or laminating, to form a unitary multilayer film. More preferably, the film 3b contains at least three microporous layers, an inner one of which includes a filler capable of catalizing the reaction of metal zinc with the electrolyte ions to form products soluble in the electrolyte. The layers of the film 3b should also exhibit uniformity in pore distribution and may contain other additives.

Suitable organic microporous polymers for the film layers are nylon, polyethylene, polypropylene and polyvinyl chloride, while suitable inorganic additives are $CeO_2$, ZnO, Alumina, potassium titanate, etc. Useable catalizing fillers are metal oxide or compound fillers such as, for example, nickel oxide, iron oxide, chromium oxide, etc., iron boride, iron carbide, nickel boride, nickel carbide, cobalt boride, and cobalt carbide.

The polymer material used for the coating 3a should be chemically and mechanically stable in the cell environment. Furthermore, the material should be capable of preventing the active material (typically, zinc oxide) at the edges of the electrode 2 from charging and dissolving. Preferably, the coating should be formed from a solution

of the polymer and should exhibit good adhesion to the zinc active material. Suitable organic polymers are nylon, polysulfone, polyethylene, polypropylene, polystyrene, polyethylene oxide, polyvinyl alcohol, etc. Also, the coating should be sufficiently thick as to provide resistance to the swelling of the adjacent positive electrode, a thickness of the range of 5-30 mils being useable.

The coating 3a and the film 3b significantly retard electrode shape change and zinc dendrictic growth, respectively. More specifically, the coating 3a tends to counteract several effects which promote shape change of the electrode 2. A first effect is the preferable dissolution of the electrode edges in comparison with the center, this effect being due to the edges coming in contact with larger amounts of the electrolyte and to their being at a higher current density. The coating 3a insulates the edges from the increased amounts of electrolyte and results in a more uniform current distribution. This is so because the coating increases the electrical resistance and, therefore, lowers the current density at the edges. The edge resistance and current density are thus caused to approach the uniform resistance and current distribution of the uncoated electrode region.

A second effect is swelling of the positive electrode which results in pressing of the electrode 2 and squeezing out of the electrolyte. This effect is present to a greater degree at the center of the electrode 2 and stimulates its shape change. The polymer coating 3a at the edges of the electrode 2 enables the electrode to resist the pressure from the positive electrode and prevents tight contact between the electrodes at the electrode 2 center. Moreover, the coating prevents squeezing out of the electrolyte because the coating and the electrodes form a closed permanent electrolyte reservoir.

As above-mentioned, the film 3b acts to retard zinc dendritric growth and thereby prevents shorting of the electrode 2 and the positive electrode. Moreover, the film 3b creates a tortuous pore network which results in a reduction in the permeability of zincate ions. At the same time, permeability of the film to hydroxyl ions increases slightly. Furthermore, gases formed during charging are not trapped between the layers of the film. As a result, zinc dendritic growth and non-uniformity of ionic flow normally resulting from such bubbles are eliminated.

The following table illustrates the operation of nickel zinc cells employing separator systems in accordance with the invention and, for comparison, provides performance data of a cell employing a commercially available separator (i.e., item 1).

TABLE I

Theoretical Ni Capacity = 24 Ah  
Theoretical Zn Capacity = 80 Ah  
Discharge = 10A x 2 hr  
Charge/Discharge Ratio = 120%

Electrode Size: H - 9" + 1/4"  
W - 6-1/2" + 1/4"  
T - .082" + .002"

| Electrode Type 8c No. | Separator Configuration | Cycle | Failure Mode | Comments |
|---|---|---|---|---|
| 2 rolled Ni 1 Zinc ZnO-85% Various metal oxides - 13% TFE-2% | Three layers of Celgard on negative plate. Pellon on the positive plates. | 126 | Shape change. | |
| 2 rolled Ni 1 Zinc ZnO-85% Various metal oxides - 13% TFE-2% | A three layer unitary microporous nylon based film and nylon coating on the edges of the negative electrode. NiO powder as a filler in the internal layer. Pellon on the positive plates. | 271 | Cell was shorted. | Cell maintained 100% capacity for 150 cycles. Zinc plate did not have any shape change. There was a small pinhole at the edge of the separator. |

TABLE I (continued)

| 2 rolled Ni 1 Zinc ZnO-85% Various metal oxides - 13% TFE-2% | A three layer unitary micro-porous nylon based film and polyethylene oxide coating on the edge of the negative electrode. NiO powder as filler in internal layer. Pellon on the positive plates. | 204 | Passivation of the nega-tive elec-trode by iron oxide layer. | There was no shape change. No holes were found due to dendrities or imperfections. |
|---|---|---|---|---|
| 2 rolled Ni 1 Zinc ZnO-88% $Bi_2O_3$-10% TFE-2% | A three layer unitary micro-porous nylon based film and PVA coating on the edges of the negative electrode. NiO powder as fill-er in internal layer. Pellon on the positive plates. | 196 | Cell was shorted. | There was some shape change. There was a small imper-fection in the separator film. |

As can be seen from Table I, cells employing separators in accordance with the invention (items 2 through 4) exhibited a cycle life of 1.5 to 2 times that exhibited by cells with commercial separators under the same charge and discharge test conditions.

The following examples describe the details of and the procedures for making the separators of items 2-4, respectively of Table I.

Example 1

In this example, the unitary film of the separator comprised three layers each formed from a microporous nylon material. The electrode coating of the separator, in turn, was prepared from solution of nylon in methanol. The nylon used for the coating was a polyamide sold under the name Elvamide 8064 (manufactured by E.I. DuPont) and the concentration of the polymer was 10% by weight of the solution. The thickness of the coating was 6 mil and the width of the edges coated was 1/2" from all sides.

The three layer film was prepared using constituents as in the EPO Publication 0040826, i.e., from a blend of a polyamide polymer sold under the name Elvamide 8064 (manufactured by E.I. DuPont), a polyolefin oxide sold under the trade name Polyox WSR N-750 (manufactured by Union Carbide) and having molecular weight 300,000, cerium dioxide and a wetting agent sold under the trade name Victawet. The blend contained the following amounts of these constituents:

60% by weight Elvamide 8064
20% by weight Polyox WSR N-750
12% by weight Victawet
8% by weight cerium dioxide

This blend was used for all three layers of the film, but the internal layer was further provided with nickel oxide powder in the amount of 50% by weight of the Elvamide 8064. Methanol was employed as the solvent for the Elvamide and Polyox, each begin dissolved in methanol separately. The required quantity of cerium dioxide and Victawet were blended with methanol and subjected to ultrasonic blending. All parts were then mixed together and the resultant mixture or solution was cast on a metal sheet using a doctor blade. The cast film or sheet was then oven dried at 60°C to form a layer of solid film. A part of the solution used to make the first layer was then mixed with nickel oxide powder and the prepared blend was cast on the top of the first one and again was dried to form a two layer film. A third layer using the original solution was then cast on the second layer. The three-layer film was then removed from the plate.

The three-layer film was heat sealed to the coated electrode edges to form the separator system. An absorber was inserted in the space between the electrode and the film to provide proper supply of electrolyte to the electrode.

Example 2

The procedure of Example 1 was employed with polyethylene oxide as the electrode edge coating. The coating thickness was 6 mils and the coating width 1/2 inch. The three-layer film was heat sealed to form a bag and the coated electrode was placed in the bag to complete the separator system.

Example 3

The procedure of Example 1 was employed with polyvinyl alcohol being used as the coating for the electrode edges. The thickness of the coating was 10 mils and the coating width about 1/4 inches. The three-layer film was heat sealed to form a separator bag and the edge coated electrode was placed in the bag to form the separator system.

In all cases, it is understood that the above-described arrangements are merely illustrative of the many possible specific embodiments which represent applications of the present invention. Numerous and varied other arrangements can readily be devised in accordance with the principles of the present invention without departing from the spirit and scope of the invention.

## What We Claim Is

1. An electrochemical cell including:

a zinc negative electrode;

and a separator system comprising:

a polymer coating disposed along the edges of said negative electrode;

and a unitary multilayer microporous film supported adjacent said zinc electrode.

2. An electrochemical cell in accordance with claim 1 wherein:

said polymer coating is non-porous.

3. An electrochemical cell in accordance with claim 2 wherein:

said zinc negative electrode comprises zinc active material;

and said polymer coating is such as to prevent dissolution and charging of said zinc active material at said edges.

4. An electrochemical cell in accordance with claim 3 wherein:

said polymer is one of nylon, polysulfone, polyethylene, polypropylene, polystyrene, polyethylene oxide, and polyvinyl alcohol.

5. An electrochemical cell in accordance with claim 1 wherein:

said coating has a thickness in the range of 5 to 30 mils.

6. An electrochemical cell in accordance with claim 1 wherein:

at least some of said layers of said film include different constituents.

7. An electrochemical cell in accordance with claim 1 wherein:

said film includes first and second outer layers and a third inner layer.

8. An electrochemical cell in accordance with claim 7 wherein:

said inner layer contains a filler for catalizing the reaction of metal zinc and electrolyte ions to form products soluble in said electrolyte.

9. An electrochemical cell in accordance with claim 8 wherein:

said electrolyte ions are hydroxyl ions.

10. An electrochemical cell in accordance with claim 9 wherein:

said electrolyte is KOH.

11. An electrochemical cell in accordance with claim 9 wherein:

said filler is nickel oxide powder.

12. An electrochemical cell in accordance with claim 8 wherein:

said filler is one of iron oxide, manganese oxide, chromium oxide, silver oxide, iron boride, iron carbide, nickel boride, nickel carbide, cobalt boride and cobalt carbide.

13. An electrochemical cell in accordance with claim 1 wherein:

said film is heat sealed to said electrode edges.

14. An electrochemical cell in accordance with claim 1 wherein:

said film forms a bag which surrounds said electrode.

15. An electrochemical cell in accordance with claim 1 further comprising:

a positive electrode;

and said separator system separates said positive and negative electrodes.

16. An electrochemical cell in accordance with claim 15 further comprising:

an electrolyte communicating with said electrodes.

17. Apparatus comprising:

a zinc negative electrode;

a polymer coating the edges of said negative electrode.

18. Apparatus in accordance with claim 17 wherein:

said polymer is non-porous.

19. Apparatus in accordance with claim 18 wherein:

the thickness of said coating is in a range of 5 to 30 mils.

20. Apparatus in accordance with claim 18 wherein:

said polymer is one of nylon, polysulfone, polyethylene, polypropylene, polystyrene, polyethylene oxide and polyvinyl alcohol.

FIG. 1

FIG. 2

0077030

European Patent
Office

**EUROPEAN SEARCH REPORT**

Application number

EP 82 10 9273

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | H 01 M 4/02 |
| X | GB-A- 164 434 (ADOLFO POUCHAIN) *Claims 1-3* | 1-4 | H 01 M 2/14 |
| | --- | | |
| Y | FR-A-2 317 778 (W.R.GRACE + CO) *Claims 1-7; figure 3; page 10, lines 30-39* | 1-4,6, 17 | |
| | --- | | |
| Y | DE-A- 828 730 (THE ELECTRIC STORAGE BATTERY COMPANY) *Claims 1-3* | 1,6,17 | |
| | --- | | |
| Y | DE-A- 585 602 (SOCIETE DES ACCUMULATEURS ELECTRIQUES) *Claim 1; figure 3* | 1,6,17 | |
| | --- | | TECHNICAL FIELDS SEARCHED (Int. Cl. 3) |
| Y | US-A-3 558 358 (EAGLE-RICHER IND.) *Claims 1-5* | 1,4,14 ,17,18 ,19,20 | H 01 M |
| | --- | | |
| D,A | US-A-3 970 472 (STEFFENSEN) *Claims 1-12* | 1-20 | |
| | ----- | | |

The present search report has been drawn up for all claims

| Place of search THE HAGUE | Date of completion of the search 29-11-1982 | Examiner STANGE R.L.H |
|---|---|---|